(19) Europäisches Patentamt
European Patent Office
Office européen des brevets

(11) EP 1 968 381 B1

(12) **EUROPÄISCHE PATENTSCHRIFT**

(45) Veröffentlichungstag und Bekanntmachung des Hinweises auf die Patenterteilung:
**29.04.2009 Patentblatt 2009/18**

(21) Anmeldenummer: **06723756.0**

(22) Anmeldetag: **27.03.2006**

(51) Int Cl.:
***A01N 43/56*** (2006.01) ***A01N 57/14*** (2006.01)
***A01N 37/24*** (2006.01) ***A01N 37/22*** (2006.01)
***A01P 3/00*** (2006.01)

(86) Internationale Anmeldenummer:
**PCT/EP2006/002779**

(87) Internationale Veröffentlichungsnummer:
**WO 2006/105889 (12.10.2006 Gazette 2006/41)**

(54) **SYNERGISTISCHE FUNGIZIDE WIRKSTOFFKOMBINATIONEN**

SYNERGISTIC FUNGICIDAL ACTIVE SUBSTANCE COMBINATIONS

COMBINAISONS D'AGENTS ACTIFS FONGICIDES SYNERGIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.04.2005 DE 102005015850**

(43) Veröffentlichungstag der Anmeldung:
**17.09.2008 Patentblatt 2008/38**

(73) Patentinhaber: **Bayer CropScience Aktiengesellschaft**
**40789 Monheim (DE)**

(72) Erfinder:
- **SCHÜTZ, Burkhard**
  **40597 Düsseldorf (DE)**
- **SUTY-HEINZE, Anne**
  **40597 Düsseldorf (DE)**
- **ELBE, Hans-Ludwig**
  **65835 Liederbach (DE)**
- **FEURER, Gerhard-Johann**
  **65835 Liederbach (DE)**

(56) Entgegenhaltungen:
**WO-A-03/010149** **WO-A-20/04067515**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 968 381 B1

## Beschreibung

Die vorliegende Erfindung betrifft neue Wirkstoffkombinationen, die aus bekannten Carboxamiden einerseits und weiteren bekannten fungiziden Wirkstoffen andererseits bestehen und sehr gut zur Bekämpfung von unerwünschten phytopathogenen Pilzen geeignet sind.

Es ist bereits bekannt, dass bestimmte Carboxamide fungizide Eigenschaften besitzen: z.B. *N*-[2-(1,3-Dimethylbutyl)phenyl]-5-fluor-1,3-dimethyl-1*H*-pyrazol-4-carboxamid aus WO 03/010149 und 3-(Trifluormethyl)-*N*-[2-(1,3-dimethylbutyl)phenyl]-5-fluor-1-methyl-1*H*-pyrazol-4-carboxamid aus DE-A 103 03 589. Die Wirksamkeit dieser Stoffe ist gut, lässt aber bei niedrigen Aufwandmengen in manchen Fällen zu wünschen übrig. Ferner ist schon bekannt, dass zahlreiche Triazol-Derivate, Anilin-Derivate, Dicarboximide und andere Heterocyclen zur Bekämpfung von Pilzen eingesetzt werden können (vgl. EP-A 0 040 345, DE-A 22 01 063, DE-A 23 24 010, Pesticide Manual, 9th. Edition (1991), Seiten 249 und 827, EP-A 0 382 375 und EP-A 0 515 901). Auch die Wirkung dieser Stoffe ist aber bei niedrigen Aufwandmengen nicht immer ausreichend. Ferner ist bereits bekannt, dass 1-(3,5-Dimethyl-isoxazol-4-sulfonyl)-2-chlor-6,6-difluor-[1,3]-dioxolo-[4,5f]-benzimidazol fungizide Eigenschaften besitzt (vgl. WO 97/06171). Schließlich ist auch bekannt, dass substituierte Halogenpyrimidine fungizide Eigenschaften besitzen (vgl. DE-A1-196 46 407, EP-B-712 396).

Es wurden nun neue Wirkstoffkombinationen mit sehr guten fungiziden Eigenschaften gefunden, enthaltend mindestens ein Carboxamid der allgemeinen Formel (I) (Gruppe 1)

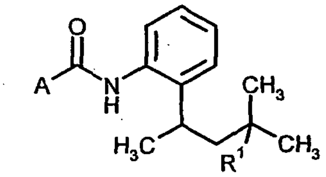

(I),

in welcher

- $R^1$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,
- A für einen der folgenden Reste A1 bis A8 steht:

A1 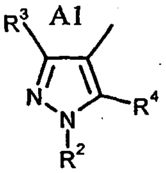
A2 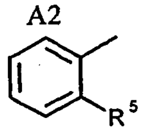
A3 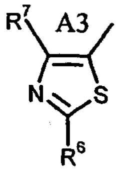
A4 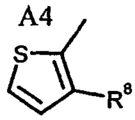

A5 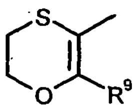
A6 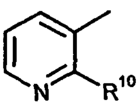
A7 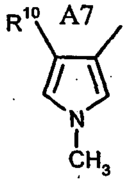
A8 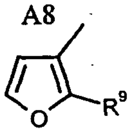

- $R^2$ für $C_1$-$C_3$-Alkyl steht,
- $R^3$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,
- $R^4$ für Wasserstoff, Halogen oder $C_1$-$C_3$-Alkyl steht,
- $R^5$ für Halogen, $C_1$-$C_3$-Alkyl oder $C_1$-$C_3$-Halogenalkyl mit 1 bis 7 Fluor-, Chlor- und/ oder Brom- atomen steht,
- $R^6$ für Wasserstoff, Halogen, $C_1$-$C_3$-Alkyl, Amino, Mono- oder Di($C_1$-$C_3$-alkyl) amino steht,
- $R^7$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,
- $R^8$ für Halogen, $C_1$-$C_3$-Alkyl oder $C_1$-$C_3$-Halogenalkyl mit 1 bis 7 Fluor-, Chlor- und/ oder Brom- atomen steht,

$R^9$ für Halogen, $C_1$-$C_3$-Alkyl oder $C_1$-$C_3$-Halogenalkyl mit 1 bis 7 Fluor-, Chlor- und/ oder Brom- atomen steht,

$R^{10}$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

und
(2) Tolclofos-methyl der Formel

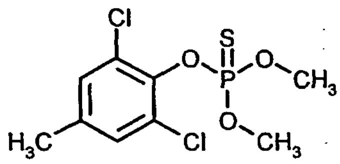

(bekannt aus DE-A 25 01 040)
und/oder
(3) Flutolanil der Formel

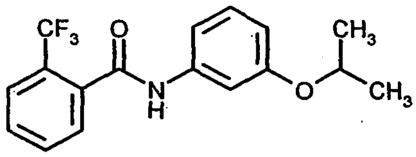

(bekannt aus DE-A 27 31 522).

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Die Verbindungen der Gruppe (1) sind durch die Formel (I) allgemein definiert.

Bevorzugt sind Carboxamide der Formel (I), in welcher

$R^1$ für Wasserstoff, Fluor, Chlor, Methyl, Ethyl, n-, iso-Propyl, Monofluormethyl, Difluormethyl, Trifluormethyl, Monochlormethyl, Dichlormethyl oder Trichlormethyl steht,

A für einen der folgenden Reste A1 bis A5 steht:

A1
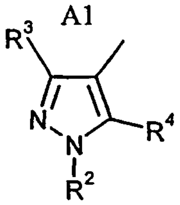
A2
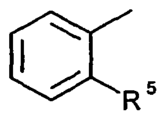
A3
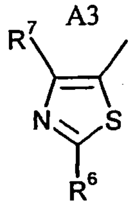
A4
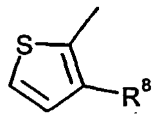
A5
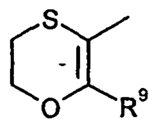

$R^2$ für Methyl, Ethyl, n- oder iso-Propyl steht,

$R^3$ für Iod, Methyl, Difluormethyl oder Trifluormethyl steht,

$R^4$ für Wasserstoff, Fluor, Chlor oder Methyl steht,

$R^5$ für Chlor, Brom, Iod, Methyl, Difluormethyl oder Trifluormethyl steht,

$R^6$ für Wasserstoff, Chlor, Methyl, Amino oder Dimethylamino steht,

$R^7$ für Methyl, Difluormethyl oder Trifluormethyl steht,

$R^8$ für Brom oder Methyl steht,

$R^9$ für Methyl oder Trifluormethyl steht.

Besonders bevorzugt sind Carboxamide der Formel (I), in welcher

$R^1$ für Wasserstoff, Fluor, Chlor, Methyl, Ethyl oder Trifluormethyl steht,

A für einen der folgenden Reste A1 oder A2 steht:

A1 A2

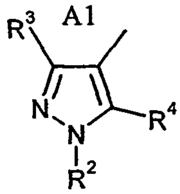

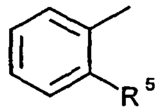

$R^2$ für Methyl oder iso-Propyl steht,
$R^3$ für Methyl, Difluormethyl oder Trifluormethyl steht,
$R^4$ für Wasserstoff oder Fluor steht,
$R^5$ für Iod, Difluormethyl oder Trifluormethyl steht.

Ganz besonders bevorzugt sind Carboxamide der Formel (I), in welcher

$R^1$ für Wasserstoff oder Methyl steht,
A für einen der folgenden Reste A1 oder A2 steht:

A1 A2

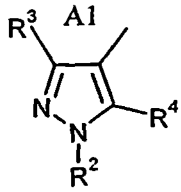

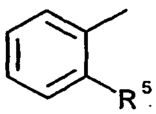

$R^2$ für Methyl steht,
$R^3$ für Methyl steht,
$R^4$ für Fluor steht,
$R^5$ für Iod oder Trifluormethyl steht.

Ganz besonders bevorzugt werden Verbindungen der Formel (Ia) in Mischungen eingesetzt,

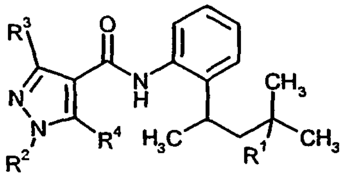

(Ia)

in welcher $R^1$, $R^2$, $R^3$ und $R^4$ die oben angegebenen Bedeutungen haben.
Ganz besonders bevorzugt werden Verbindungen der Formel (Ib) in Mischungen eingesetzt,

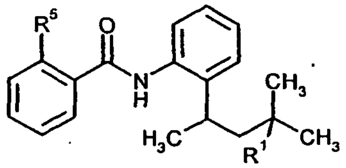

(Ib)

in welcher $R^1$ und $R^5$ die oben angegebenen Bedeutungen haben.

Die Formel (I) umfasst insbesondere die folgenden bevorzugten Mischungspartner der Gruppe (1):

(1-1) *N*-[2-(1,3-Dimethylbutyl)phenyl]-1,3-dimethyl-1*H*pyrazol-4-carboxamid
(1-2) *N*-[2-(1,3-Dimethylbutyl)phenyl]-5-fluor-1,3-dimethyl-1*H*-pyrazol-4-carboxamid (bekannt aus WO 03/010149)

(1-3) *N*-[2-(1,3-Dimethylbutyl)phenyl]-5-chlor-1,3-dimethyl-1*H*-pyrazol-4-carboxamid (bekannt aus JP-A 10-251240)
(1-4) 3-(Difluormethyl)-*N*-[2-(1,3-dimethylbutyl)phenyl]-1-methyl-1*H*-pyrazol-4-carboxamid
(1-5) 3-(Trifluormethyl)-*N*-[2-(1,3-dimethylbutyl)phenyl]-5-fluor-1-methyl-1*H*-pyrazol-4-carboxamid (bekannt aus DE-A 103 03 589)
(1-6) 3-(Trifluormethyl)-*N*-[2-(1,3-dimethylbutyl)phenyl]-5-chlor-1-methyl-1*H*-pyrazol-4-carboxamid (bekannt aus JP-A 10-251240)
(1-7) 1,3-Dimethyl-*N*-[2-(1,3,3-trimethylbutyl)phenyl]-1*H*-pyrazol-4-carboxamid (bekannt aus JP-A 10-251240)
(1-8) 5-Fluor-1,3-dimethyl-*N*-[2-(1,3,3-trimethylbutyl)phenyl]-1*H*-pyrazol-4-carboxamid (bekannt aus WO 03/010149)
(1-9) 3-(Difluormethyl)-1-methyl-*N*-[2-(1,3,3-trimethylbutyl)phenyl]-1*H*-pyrazol-4-carboxamid
(1-10) 3-(Trifluormethyl)-1-methyl-*N*-[2-(1,3,3-trimethylbutyl)phenyl]-1*H*-pyrazol-4-carboxamid
(1-11) 3-(Trifluormethyl)-5-fluor-1-methyl-*N*-[2-(1,3,3-trimethylbutyl)phenyl]-1*H*-pyrazol-4-carboxamid (bekannt aus DE-A 103 03 589)
(1-12) 3-(Trifluormethyl)-5-chlor-1-methyl-*N*-[2-(1,3,3-trimethylbutyl)phenyl]-1*H*-pyrazol-4-carboxamid (bekannt aus JP-A 10-251240)
(1-13) *N*-[2-(1,3-Dimethylbutyl)phenyl]-2-iodbenzamid
(bekannt aus DE-A 102 29 595)
(1-14) 2-Iod-*N*-[2-(1,3,3-trimethylbutyl)phenyl]benzamid
(bekannt aus DE-A 102 29 595)
(1-15) *N*-[2-(1,3-Dimethylbutyl)phenyl]-2-(trifluormethyl)benzamid
(bekannt aus DE-A 102 29 595)
(1-16) 2-(Trifluormethyl)-*N*-[2-(1,3,3-trimethylbutyl)phenyl]benzamid
(bekannt aus DE-A 102 29 595)

Hervorgehoben sind erfindungsgemäße Wirkstoffkombinationen, die neben dem Carboxamid (1-8) 5-Fluor-1,3-dimethyl-*N*-[2-(1,3,3-trimethylbutyl)phenyl]-1*H*-pyrazol-4-carboxamid (Gruppe 1) einen oder mehrere, bevorzugt einen, Mischungspartner der Gruppen (2) und (3) enthalten.

Hervorgehoben sind erfindungsgemäße Wirkstoffkombinationen, die neben dem Carboxamid (1-2) N-[2-(1,3-Dimethylbutyl)phenyl]-5-fluor-1,3-dimethyl-1*H*-pyrazol-4-carboxamid (Gruppe 1) einen oder mehrere, bevorzugt einen, Mischungspartner der Gruppen (2) und (3) enthalten.

Hervorgehoben sind erfindungsgemäße Wirkstoffkombinationen, die neben dem Carboxamid (1-15) *N*-[2-(1,3-Dimethylbutyl)phenyl]-2-(trifluormethyl)benzamid (Gruppe 1) einen oder mehrere, bevorzugt einen, Mischungspartner der Gruppen (2) und (3) enthalten.

Hervorgehoben sind erfindungsgemäße Wirkstoffkombinationen, die neben dem Carboxamid (1-13) *N*-[2-(1,3-Dimethylbutyl)phenyl]-2-iodbenzamid (Gruppe 1) einen oder mehrere, bevorzugt einen, Mischungspartner der Gruppen (2) und (3) enthalten.

Im Folgenden werden bevorzugte Wirkstoffkombinationen beschrieben, die aus zwei Gruppen von Wirkstoffen bestehen und jeweils wenigstens ein Carboxamid der Formel (I) (Gruppe 1) und wenigstens einen Wirkstoff der angegebenen Gruppe (2) und (3) enthalten. Diese Kombinationen sind die Wirkstoffkombinationen A und B.

Innerhalb der bevorzugten Wirkstoffkombinationen A und B sind solche hervorzuheben, die ein Carboxamid der Formel (I) (Gruppe 1)

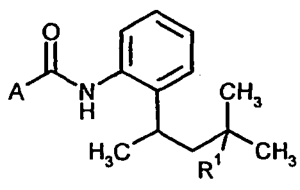

(I)

in welcher $R^1$ und A die oben angegebenen Bedeutungen haben, enthalten.
Besonders bevorzugt sind Wirkstoffkombinationen A und B, enthaltend ein Carboxamid der Formel (I) (Gruppe 1)

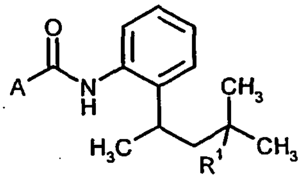

(I)

in welcher

R¹ für Wasserstoff, Fluor, Chlor, Methyl, Ethyl oder Trifluormethyl steht,
A für eine der folgenden Reste A1 oder A2:

A1 A2

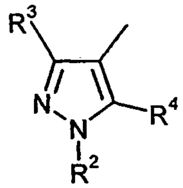

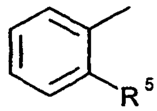

steht,
$R^2$ für Methyl steht,
$R^3$ für Methyl, Difluormethyl oder Trifluormethyl steht,
$R^4$ für Wasserstoff oder Fluor steht,
$R^5$ für Iod oder Trifluormethyl steht.

Ganz besonders bevorzugt sind Wirkstoffkombinationen A und B, worin das Carboxamid der Formel (I) (Gruppe 1) aus der folgenden Liste ausgewählt ist:

(1-1) *N*-[2-(1,3-Dimethylbutyl)phenyl]-1,3-dimethyl-1*H*-pyrazol-4-carboxamid
(1-2) *N*-[2-(1,3-Dimethylbutyl)phenyl]-5-fluor-1,3-dimethyl-1*H*-pyrazol-4-carboxamid
(1-3) *N*-[2-(1,3-Dimethylbutyl)phenyl]-5-chlor-1,3-dimethyl-1*H*-pyrazol-4-carboxamid
(1-4) 3-(Difluormethyl)-*N*-[2-(1,3-dimethylbutyl)phenyl]-1-methyl-1*H*-pyrazol-4-carboxamid
(1-5) 3-(Trifluormethyl)-*N*-[2-(1,3-dimethylbutyl)phenyl]-5-fluor-1-methyl-1*H*-pyrazol-4-carboxamid
(1-6) 3-(Trifluormethyl)-*N*-[2-(1,3-dimethylbutyl)phenyl]-5-chlor-1-methyl-1*H*-pyrazol-4-carboxamid
(1-7) 1,3-Dimethyl-*N*-[2-(1,3,3-trimethylbutyl)phenyl]-1*H*-pyruol-4-carboxamid
(1-8) 5-Fluor-1,3-dimethyl-*N*-[2-(1,3,3-trimethylbutyl)phenyl]-1*H*-pyrazol-4-carboxamid
(1-9) 3-(Difluormethyl)-1-methyl-*N*-[2-(1,3,3-trimethylbutyl)phenyl]-1*H*-pyrazol-4-carboxamid
(1-10) 3-(Trifluormethyl)-1-methyl-*N*-[2-(1,3,3-trimethylbutyl)phenyl]-1*H*-pyrazol-4-carboxamid
(1-11) 3-(Trifluormethyl)-5-fluor-1-methyl-*N*-[2-(1,3,3-trimethylbutyl)phenyl]-1*H*-pyrazol-4-carboxamid
(1-12) 3-(Trifluormethyl)-5-chlor-1-methyl-*N*-[2-(1,3,3-trimethylbutyl)phenyl]-1*H*-pyrazol-4-carboxamid
(1-13) *N*-[2-(1,3-Dimethylbutyl)phenyl]-2-iodbenzamid
(1-14) 2-Iod-*N*-[2-(1,3,3-trimethylbutyl)phenyl]benzamid
(1-15) *N*-[2-(1,3-Dimethylbutyl)phenyl]-2-(trifluormethyl)benzamid
(1-16) 2-(Trifluormethyl)-*N*-[2-(1,3,3-trimethylbutyl)phenyl]benzamid

Insbesondere bevorzugt sind Wirkstoffkombinationen A und B, worin das Carboxamid der Formel (I) (Gruppe 1) aus der folgenden Liste ausgewählt ist:

(1-2) *N*-[2-(1,3-Dimethylbutyl)phenyl]-5-fluor-1,3-dimethyl-1*H*-pyrazol-4-carboxamid
(1-8) 5-Fluor-1,3-dimethyl-*N*-[2-(1,3,3-trimethylbutyl)phenyl]-1*H*-pyrazol-4-carboxamid
(1-10) 3-(Trifluormethyl)-1-methyl-*N*-[2-(1,3,3-trimethylbutyl)phenyl]-1*H*-pyrazol-4-carboxamid
(1-13) *N*-[2-(1,3-Dimethylbutyl)phenyl]-2-iodbenzamid
(1-14) 2-Iod-*N*-[2-(1,3,3-trimethylbutyl)phenyl]benzamid
(1-15) *N*-[2-(1,3-Dimethylbutyl)phenyl]-2-(trifluormethyl)benzamid

(1-16) 2-(Trifluormethyl)-*N*-[2-(1,3,3-trimethylbutyl)phenyl]benzamid

Die Wirkstoffkombinationen A enthalten neben einem Carboxamid der Formel (I) (Gruppe 1) auch (2) Tolclofos-methyl der Formel

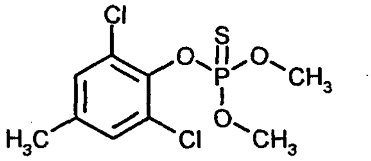

Hervorgehoben sind die in der folgenden Tabelle 1 angeführten Wirkstoffkombinationen A:

**Tabelle 1: Wirkstoffkombinationen A**

| Nr. | Carboxamid der Formel (I) | Mischungspartner |
|---|---|---|
| A-1 | (1-2) *N*-[2-(1,3-Dimethylbutyl)phenyl]-5-fluor-1,3-dimethyl-1*H*-pyrazol-4-carboxamid | (2) Tolclofos-methyl |
| A-2 | (1-8) 5-Fluor-1,3-dimethyl-*N*-[2-(1,3,3-trimethylbutyl)phenyl]-1*H*-pyrazol-4-carboxamid | (2) Tolclofos-methyl |
| A-3 | (1-10) 3-(Trifluormethyl)-1-methyl-*N*-[2-(1,3,3-trimethylbutyl)phenyl]-1*H*-pyrazol-4-carboxamid | (2) Tolclofos-methyl |
| A-4 | (1-13) *N*-[2-(1,3-Dimethylbutyl)phenyl]-2-iodbenzamid | (2) Tolclofes-methyl |
| A-5 | (1-14) 2-Iod-*N*-[2-(1,3,3-trimethylbutyl)phenyl]benzamid | (2) Tolclofos-methyl |
| A-6 | (1-15) *N*-[2-(1,3-Dimethylbutyl)phenyl]-2-(trifluormethyl)benzamid | (2) Tolclofos-methyl |
| A-7 | (1-16) 2-(Trifluormethyl)-*N*-[2-(1,3,3-trimethylbutyl)phenyl]benzamid | (2) Tolclofos-methyl |

Die Wirkstoffkombinationen B enthalten neben einem Carboxamid der Formel (I) (Gruppe 1) auch (3) Flutolanil der Formel

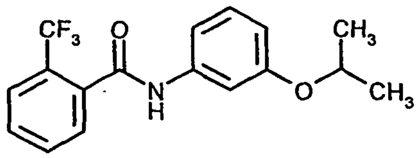

Hervorgehoben sind die in der folgenden Tabelle 2 angeführten Wirkstoffkombinationen B:

**Tabelle 2: Wirkstoffkombinationen B**

| Nr. | Carboxamid der Formel (I) | Mischungspartner |
|---|---|---|
| B-1 | (1-2) *N*-[2-(1,3-Dimethylbutyl)phenyl]-5-fluor-1,3-dimethyl-1*H*-pyrazol-4-carboxamid | (3) Flutolanil |
| B-2 | (1-8) 5-Fluor-1,3-dimethyl-*N*-[2-(1,3,3-trimethylbutyl)phenyl]-1*H*-pyrazol-4-carboxamid | (3) Flutolanil |
| B-3 | (1-10) 3-(Trifluormethyl)-1-methyl-*N*-[2-(1,3,3-trimethylbutyl)phenyl]-1*H*-pyrazol-4-carboxamid | (3) Flutolanil |
| B-4 | (1-13) *N*-[2-(1,3-Dimethylbutyl)phenyl]-2-iodbenzamid | (3) Flutolanil |
| B-5 | (1-14) 2-Iod-*N*-[2-(1,3,3-trimethylbutyl)phenyl]benzamid | (3) Flutolanil |

(fortgesetzt)

| Nr. | Carboxamid der Formel (I) | Mischungspartner |
|---|---|---|
| B-6 | (1-15) *N*-[2-(1,3-Dimethylbutyl)phenyl]-2-(trifluormethyl)benzamid | (3) Flutolanil |
| B-7 | (1-16) 2-(Trifluormethyl)-*N*-[2-(1,3,3-trimethylbutyl)phenyl]benzamid | (3) Flutolanil |

Die erfindungsgemäßen Wirkstoffkombinationen enthalten neben einem Wirkstoff der Formel (I) mindestens einen Wirkstoff von den Verbindungen der Gruppen (2) und (3). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im Allgemeinen enthalten die erfindungsgemäßen Kombinationen Wirkstoffe der Formel (I) und einen Mischpartner aus einer der Gruppen (2) und (3) in den in der nachfolgenden Tabelle 3 beispielhaft angegebenen Mischungsverhältnisse.

Die Mischungsverhältnisse basieren auf Gewichtsverhältnissen. Das Verhältnis ist zu verstehen als Wirkstoff der Formel (I) : Mischpartner.

Tabelle 3: Mischungsverhältnisse

| Mischpartner | bevorzugtes Mischungsverhältnis | besonders bevorzugtes Mischungsverhältnis |
|---|---|---|
| (2) Tolclofos-methyl | 50 : 1 bis 1 : 50 | 10: 1 bis 1 : 20 |
| (3) Flutolanil | 50 : 1 bis 1 : 50 | 20 : 1 bis 1 : 20 |

Das Mischungsverhältnis ist in jedem Fall so zu wählen, dass eine synergistische Mischung erhalten wird. Die Mischungsverhältnisse zwischen der Verbindung der Formel (I) und einer Verbindung aus einer der Gruppen (2) und (3) kann auch zwischen den einzelnen Verbindungen einer Gruppe variieren.

Die erfindungsgemäßen Wirkstoffkombinationen weisen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:

Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;
Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita;
Uromyces-Arten, wie beispielsweise Uromyces appendiculatus;
Erkrankungen, hervorgerufen durch Erreger der Gruppe der Oomyceten wie z.B.
Bremia-Arten, wie beispielsweise Bremia lactucae;
Peronospora-Arten, wie beispielsweise Peronospora pisi oder P. brassicae;
Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder
Pseudoperonospora cubensis;
Pythium-Arten, wie beispielsweise Pythium ultimum;
Blattfleckenkrankheiten und Blattwelken, hervorgerufen durch z.B.

Alternaria-Arten, wie beispielsweise Alternaria solani;
Cercospora-Arten, wie beispielsweise Cercospora beticola;
Cladosporium-Arten, wie beispielsweise Cladosporium cucumerinum;
Cochliobolus-Arten, wie beispielsweise Cochliobolus sativus
(Konidienform: Drechslera, Syn: Helminthosporium);
Colletotrichum-Arten, wie beispielsweise Colletotrichum lindemuthanium;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;
Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerelle graminicola;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;
Wurzel- und Stengelkrankheiten, hervorgerufen durch z.B.
Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;
Thielaviopsis-Arten, wie beispielsweise Thielaviopsis basicola;
Ähren- und Rispenerkrankungen (inklusive Maiskolben), hervorgerufen durch z.B.
Alternaria-Arten, wie beispielsweise Alternaria spp.;
Aspergillus-Arten, wie beispielsweise Aspergillus flavus;
Cladosporium-Arten, wie beispielsweise Cladosporium spp. wie Cladosporium cladosporioides;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;
Erkrankungen, hervorgerufen durch Brandpilze wie z.B.
Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;
Fruchtfäule hervorgerufen durch z.B.
Aspergillus-Arten, wie beispielsweise Aspergillus flavus;
Botrytis-Arten, wie beispielsweise Botrytis cinerea;
Penicillium-Arten, wie beispielsweise Penicillium expansum und Penicillium purpurogenum;
Sclerotinia-Arten, wie beispielsweise Sclerotinia sclerotiorum;
Verticilium-Arten, wie beispielsweise Verticilium alboatrum;
Samen- und bodenbürtige Fäulen und Welken, sowie Sämlingserkrankungen, hervorgerufen durch z.B.
Fusarium-Arten, wie beispielsweise Fusarium culmorum;
Phytophthora Arten, wie beispielsweise Phytophthora cactorum;
Pythium-Arten, wie beispielsweise Pythium ultimum;
Rhizoctonia-Arten, wie beispielsweise Rhizoctonia solani;
Sclerotium-Arten, wie beispielsweise Sclerotium rolfsii;
Krebserkrankungen, Gallen und Hexenbesen, hervorgerufen durch z.B.
Nectria-Arten, wie beispielsweise Nectria galligena;
Welkeerkrankungen hervorgerufen durch z.B.
Monilinia-Arten, wie beispielsweise Monilinia laxa;

Deformationen von Blättern, Blüten und Früchten, hervorgerufen durch z.B.
Taphrina-Arten, wie beispielsweise Taphrina deformans;
Degenerationserkranhungen holziger pflanzen, hervorgerufen durch z.B.
Esca-Arten, wie beispielsweise Phaemoniella clamydospora;
Blüten- und Samenerkrankungen, hervorgerufen durch z.B.
Botrytis-Arten, wie beispielsweise Botrytis cinerea;
Erkrankungen von Pflanzenknollen, hervorgerufen durch z.B.
Rhizoctonia-Arten, wie beispielsweise Rhizoctonia solani;
Helminthosporium-Arten, wie beispielsweise Helminthosporium solani;
Erkrankungen, hervorgerufen durch bakterielle Erreger wie z.B.
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora.

Bevorzugt können die folgenden Krankheiten von Soja-Bohnen bekämpft werden:

Pilzkrankheiten an Blättern, Stängeln, Schoten und Samen verursacht durch z.B.
Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Pod and Stem Blight (Phomopsis sojae), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassücola)

Pilzkrankheiten an Wurzeln und der Stängelbasis verursacht durch z.B.
Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die gute Pflanzenverträglichkeit der Wirkstoffkombinationen in den zur Bekämpfung von Pflanzenkrankheiten notwendigen Konzentrationen erlaubt eine Behandlung von ganzen Pflanzen (oberirdische Pflanzenteile und Wurzeln), von Pflanz- und Saatgut, und des Bodens. Die erfindungsgemäßen Wirkstoffkombinationen können zur Blattapplikation oder auch als Beizmittel eingesetzt werden.

Die gute Pflanzenverträglichkeit der verwendbaren Wirkstoffe in den zur Bekämpfung von Pflanzenkrankheiten notwendigen Konzentrationen erlaubt eine Behandlung des Saatguts. Die erfindungsgemäßen Wirkstoffe können somit als Beizmittel eingesetzt werden.

Ein großer Teil des durch phytopathogene Pilze verursachten Schadens an Kulturpflanzen entsteht bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen.

Weiterhin bezieht sich die Erfindung auf Saatgut, welches zum Schutz vor phytopathogenen Pilzen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

Die erfindungsgemäßen Mittel eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis zu.

Im Rahmen der vorliegenden Erfindung wird das erfindungsgemäßes Mittel alleine oder in einer geeigneten Formulierung auf das Saatgut aufgebracht Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer

bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, weiter entwickeltes Wurzelsystem, höhere Beständigkeit der Pflanzenart bzw. Pflanzensorte, gesteigertes Wachstum der Schösslinge, höhere Pflanzenvitalität, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, größere Früchte, höhere Pflanzengröße, grünere Blattfarbe, frühere Blüte, höhere Qualität und/oder höherer Ernährungswert der Ernteprodukte, höhere Zuckerkonzentration in den Früchten, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte (Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzed"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die erfindungsgemäßen Wirkstoffkombinationen können in Abhängigkeit von ihren jeweiligen physikalischen und/oder chemischen Eigenschaften in die üblichen Formulierungen überführt werden, wie Lösungen, Emulsionen, Suspensionen, Pulver, Stäubemittel, Schäume, Pasten, lösliche Pulver, Granulate, Aerosole, Suspensions-Emulsions-Konzentrate, Wirkstoff-imprägnierte Natur- und synthetische Stoffe sowie Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol

oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser.

Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid.

Als feste Trägerstoffe kommen infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Der Wirkstoffgehalt der aus den handelsüblichen Formulierungen bereiteten Anwendungsformen kann in weiten Bereichen variieren. Die Wirkstoffkonzentration der Anwendungsformen zum Bekämpfen tierischer Schädlingen wie Insekten und Akariden kann von 0,0000001 bis zu 95 Gew.-% Wirkstoff, vorzugsweise zwischen 0,0001 und 1 Gew.-% liegen. Die Anwendung geschieht in einer den Anwendungsformen angepassten üblichen Weise.

Die Formulierungen zur Bekämpfung unerwünschter phytopathogener Pilze enthalten im Allgemeinen zwischen 0,1 und 95 Gew.-% Wirkstoffe, vorzugsweise zwischen 0,5 und 90 %.

Die erfindungsgemäßen Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver, Stäubemittel und Granulate, angewendet werden. Die Anwendung geschieht in üblicher Weise, z.B. durch Gießen (drenchen), Tröpfchenbewässerung, Verspritzen, Versprühen, Verstreuen, Verstäuben, Verschäumen, Bestreiche, Verstreichen, Trockenbeizen, Feuchtbeizen, Nassbeizen, Schlämmbeizen, Inkrustieren usw.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende fungizide Wirkung für eine gegebene Kombination zweier Wirkstoffe kann nach S.R Colby ("Calculating Synergistic and Antagonistic Responses of Herbicide Combinations", Weeds 1967, 15, 20-22) wie folgt berechnet werden:

Wenn

X den *Wirkungsgrad* beim Einsatz des Wirkstoffes A in einer Aufwandmenge von *m g/ha* bedeutet,
Y den *Wirkungsgrad* beim Einsatz des Wirkstoffes B in einer Aufwandmenge von *n g/ha* bedeutet und
E den *Wirkungsgrad* beim Einsatz der Wirkstoffe A und B in Aufwandmengen von *m und n g/ha* bedeutet,

dann ist

$$E = X + Y - \frac{X \times Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

## Anwendungsbeispiele

Beispiel A

**Pyricularia oryzae - Test (in vitro) / Mikrotiterplatten**

Der Mikrotest wird in Mikrotiterplatten mit Potato-Dextrose Broth (PDB) als flüssigem Versuchsmedium durchgeführt. Die Anwendung der Wirkstoffe erfolgt als technisches a.i., gelöst in Aceton bzw. als handelsübliche Formulierung. Zur Inokulation wird eine Sporensuspension von *Pyricularia oryzae* verwendet. Nach 4 Tagen Inkubation bei Dunkelheit und unter Schütteln (10 Hz) wird die Lichtdurchlässigkeit in jeder gefüllten Kavität der Mikrotiterplatten mit Hilfe eines Spektrophotometers ermittelt. Dabei bedeutet 0 % ein Wirkungsgrad, der dem Wachstum in den Kontrollen entspricht, während ein Wirkungsgrad von 100 % bedeutet, dass kein Pilzwachstum beobachtet wird.

Aus der nachfolgenden Tabelle geht eindeutig hervor, dass die gefundene Wirkung der erfindungsgemäßen Wirkstoffkombination größer ist als die berechnete, d.h. dass ein synergistischer Effekt vorliegt.

Tabelle A

| **Pyricularia oryzae - Test (in vitro) / Mikrotiterplatten** | | | |
|---|---|---|---|
| Wirkstoffe | Wirkstoffkonzentration in ppm | Wirkungsgrad in % | |
| | | gef.* | ber.** |
| (1-2) N-[2-(1,3-Dimethylbutyl)phenyl]-5-fluor-1,3-dimethyl-1H-pyrazol-4-carboxamid | 0.03 | 20 | |
| (2) Tolclofos-methyl | 0.03 | 13 | |
| (1-2) N-[2-(1,3-Dimethylbutyl)phenyl]-5-fluor-1,3-dimethyl-1H-pyrazol-4-carboxamid + (2) Tolclofos-methyl (1 : 1) | **0.03 + 0.03** | **55** | **30** |
| * gef. = gefundene Wirkung<br>** ber. = nach der Colby-Formel berechnete Wirkung | | | |

Beispiel B

**Alternaria mali - Test (in vitro) / Mikrotiterplatten**

Der Mikrotest wird in Mikrotiterplatten mit Potato-Dextrose Broth (PDB) als flüssigem Versuchsmedium durchgeführt. Die Anwendung der Wirkstoffe erfolgt als technisches a.i:, gelöst in Aceton bzw. als handelsübliche Formulierung. Zur Inokulation wird eine Sporensuspension von *Alternaria mali* verwendet. Nach 3 Tagen Inkubation bei Dunkelheit und unter Schütteln (10 Hz) wird die Lichtdurchlässigkeit in jeder gefüllten Kavität der Mikrotiterplatten mit Hilfe eines Spektrophotometers ermittelt. Dabei bedeutet 0 % ein Wirkungsgrad, der dem Wachstum in den Kontrollen entspricht, während ein Wirkungsgrad von 100 % bedeutet, dass kein Pilzwachstum beobachtet wird.

Aus der nachfolgenden Tabelle geht eindeutig hervor, dass die gefundene Wirkung der erfindungsgemäßen Wirkstoffkombination größer ist als die berechnete, d.h. dass ein synergistischer Effekt vorliegt

Tabelle B

| **Alternaria mali - Test (in vitro) / Mikrotiterplatten** | | | |
|---|---|---|---|
| Wirkstoffe | Wirkstoffkonzentration in ppm | Wirkungsgrad in % | |
| | | gef.* | ber.** |
| (1-2) N-[2-(1,3-Dimethylbutyl)phenyl]-5-fluor-1,3-dimethyl-1H-pyrazol-4-carboxamid | 1 | 83 | |
| (3) Flutolanil | 1 | 12 | |
| (1-2) N-[2-(1,3-Dimethylbutyl)phenyl]-5-fluor-1,3-dimethyl-1H-pyrazol-4-carboxamid + (3) Flutolanil (1 : 1) | **1 + 1** | **96** | **85** |
| * gef. = gefundene Wirkung<br>** ber. = nach der Colby-Formel berechnete Wirkung | | | |

**Patentansprüche**

1. Synergistische fungizide Wirkstoffkombinationen enthaltend ein Carboxamid der allgemeinen Formel (I) (Gruppe 1)

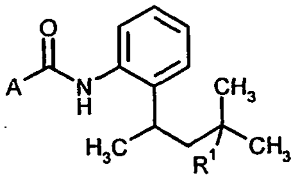

(I)

in welcher

$R^1$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
A für einen der folgenden Reste A1 bis A8 steht:

A1

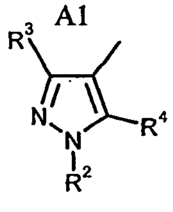

A2

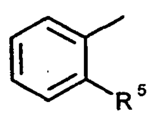

A3

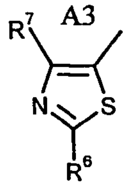

A4

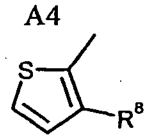

A5

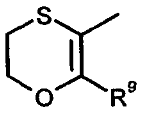

A6

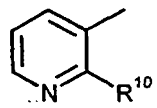

A7

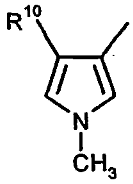

A8

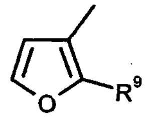

$R^2$ für $C_1$-$C_3$-Alkyl steht,
$R^3$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
$R^4$ für Wasserstoff, Halogen oder $C_1$-$C_3$-Alkyl steht,
$R^5$ für Halogen, $C_1$-$C_3$-Alkyl oder $C_1$-$C_3$-Halogenalkyl mit 1 bis 7 Fluor-, Chlor- und/oder Bromatomen steht,
$R^6$ für Wasserstoff, Halogen, $C_1$-$C_3$-Alkyl, Amino, Mono- oder Di($C_1$-$C_3$-alkyl)amino steht,
$R^7$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
$R^8$ für Halogen, $C_1$-$C_3$-Alkyl oder $C_1$-$C_3$-Halogenalkyl mit 1 bis 7 Fluor-, Chlor- und/oder Bromatomen steht,
$R^9$ für Halogen, $C_1$-$C_3$-Alkyl oder $C_1$-$C_3$-Halogenalkyl mit 1 bis 7 Fluor-, Chlor- und/oder Bromatomen steht,
$R^{10}$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

und
(2) Tolclofos-methyl der Formel

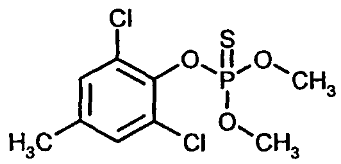

und/oder
(3) Flutolanil der Formel

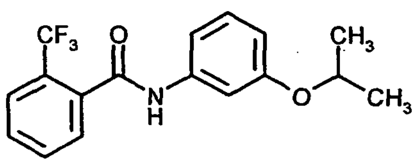

**2.** Wirkstoffkombinationen gemäß Anspruch 1 enthaltend ein Carboxamid der allgemeinen Formel (I) gemäß Anspruch 1 (Gruppe 1), in welcher

$R^1$ für Wasserstoff, Fluor, Chlor, Methyl, Ethyl, n-, iso-Propyl, Monofluormethyl, Difluor-methyl, Trifluormethyl, Monochlormethyl, Dichlormethyl oder Trichlormethyl steht,
A für einen der folgenden Reste A1 bis A5 steht:

A1
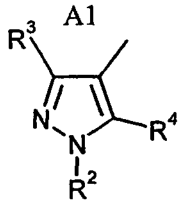
A2
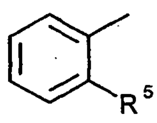
A3
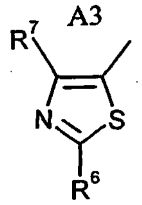
A4
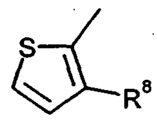
A5
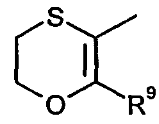

$R^2$ für Methyl, Ethyl, n- oder iso-Propyl steht,
$R^3$ für Iod, Methyl, Difluormethyl oder Trifluormethyl steht,
$R^4$ für Wasserstoff, Fluor, Chlor oder Methyl steht,
$R^5$ für Chlor, Brom, Iod, Methyl, Difluormethyl oder Trifluormethyl steht,
$R^6$ für Wasserstoff, Chlor, Methyl, Amino oder Dimethylamino steht,
$R^7$ für Methyl, Difluormethyl oder Trifluormethyl steht,
$R^8$ für Brom oder Methyl steht,
$R^9$ für Methyl oder Trifluormethyl steht.

**3.** Wirkstoffkombinationen gemäß Anspruch 1 enthaltend das Carboxamid (1-8) 5-Fluor-1,3-dimethyl-*N*-[2-(1,3,3-trimethylbutyl)phenyl]-1*H*-pyrazol-4-carboxamid (Gruppe 1) und mindestens einen Wirkstoff, der aus den folgenden Gruppen (2) und (3) gemäß Anspruch 1 ausgewählt ist.

**4.** Wirkstoffkombinationen gemäß Anspruch 1 enthaltend das Carboxamid (1-2) *N*-[2-(1,3-Dimethylbutyl)phenyl]-5-fluor-1,3-dimethyl-1*H*-pyrazol-4-carboxamid (Gruppe 1) und mindestens einen Wirkstoff, der aus den folgenden Gruppen (2) und (3) gemäß Anspruch 1 ausgewählt ist.

**5.** Wirkstoffkombinationen gemäß Anspruch 1 enthaltend das Carboxamid (1-15) *N*-[2-(1,3-Dimethylbutyl)phenyl]-2-(trifluormethyl)benzamid (Gruppe 1) und mindestens einen Wirkstoff, der aus den folgenden Gruppen (2) und (3) gemäß Anspruch 1 ausgewählt ist.

**6.** Wirkstoffkombinationen gemäß Anspruch 1 enthaltend das Carboxamid (1-13) *N*-[2-(1,3-Dimethylbutyl)phenyl]-2-iodbenzamid (Gruppe 1) und mindestens einen Wirkstoff, der aus den folgenden Gruppen (2) und (3) gemäß Anspruch 1 ausgewählt ist

**7.** Verwendung von Wirkstoffkombinationen gemäß Anspruch 1 zum Bekämpfung von unerwünschten phytopathogenen Pilzen.

**8.** Verwendung von Wirkstoffkombinationen gemäß Anspruch 1 zur Behandlung von Saatgut.

**9.** Verwendung von Wirkstoffkombinationen gemäß Anspruch 1 zur Behandlung von transgenen Pflanzen.

**10.** Verwendung von Wirkstoffkombinationen gemäß Anspruch 1 zur Behandlung von Saatgut transgener Pflanzen.

**11.** Saatgut, welches mit einer Wirkstoffkombination gemäß Anspruch 1 behandelt wurde.

**12.** Verfahren zum Bekämpfen von unerwünschten phytopathogenen Pilzen, **dadurch gekennzeichnet, dass** man Wirkstoffkombinationen gemäß Anspruch 1 auf die unerwünschten phytopathogenen Pilze und/oder deren Lebensraum und/oder Saatgut ausbringt.

**13.** Verfahren zum Herstellen von fungiziden Mitteln, **dadurch gekennzeichnet, dass** man Wirkstoffkombinationen gemäß Anspruch 1 mit Streckmitteln und/ oder oberflächenaktiven Stoffen vermischt.

## Claims

**1.** Synergistic fungicidal active compound combinations comprising a carboxamide of the general formula (I) (group 1)

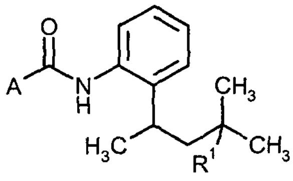

(I)

in which

R1 represents hydrogen, halogen, C1-C3-alkyl or C1-C3-haloalkyl having 1 to 7 fluorine, chorine and/or bromine atoms,
A represents one of the radicals A1 to A8 below:

A1
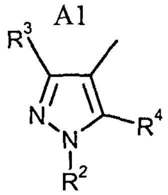

A2
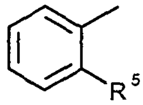

A3
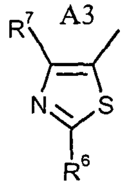

A4
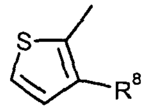

A5
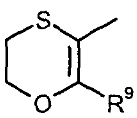

A6
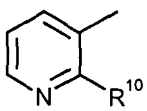

A7
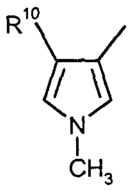

A8
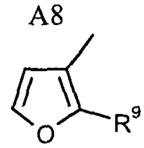

R2 represents C1-C3-alkyl,
R3 represents hydrogen, halogen, C1-C3-alkyl or C1-C3-haloalkyl having 1 to 7 fluorine, chlorine and/or bromine atoms,
R4 represents hydrogen, halogen or C1-C3-alkyl,
R5 represents halogen, C1-C3-alkyl or C1-C3-haloalkyl having 1 to 7 fluorine, chlorine and/or bromine atoms,
R6 represents hydrogen, halogen, C1-C3-alkyl, amino, mono- or di(C1-C3-alkyl)amino,
R7 represents hydrogen, halogen, C1-C3-alkyl or C1-C3-haloalkyl having 1 to 7 fluorine, chlorine and/or bromine atoms,
R8 represents halogen, C1-C3-alkyl or C1-C3-haloalkyl having 1 to 7 fluorine, chlorine and/or bromine atoms,
R9 represents halogen, C1-C3-alkyl or C1-C3-haloalkyl having 1 to 7 fluorine, chlorine and/or bromine atoms,
R10 represents hydrogen, halogen, C1-C3-alkyl or C1-C3-haloalkyl having 1 to 7 fluorine, chlorine and/or bromine atoms,

and
(2) tolclofos-methyl of the formula

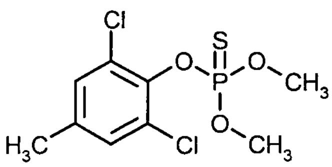

and/or

(3) flutolanil of the formula

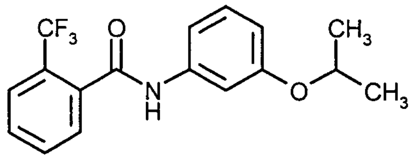

2. Active compound combinations according to Claim 1 comprising a carboxamide of the general formula (I) according to Claim 1 (group 1) in which

R1 represents hydrogen, fluorine, chlorine, methyl, ethyl, n-propyl, isopropyl, mono-fluoromethyl, difluoromethyl, trifluoromethyl, monochloromethyl, dichloromethyl or trichloromethyl,
A represents one of the radicals A1 to A5 below:

A1
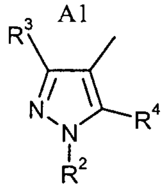
A2
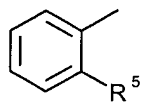
A3
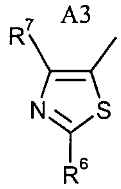
A4
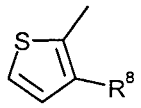
A5
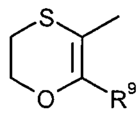

R2 represents methyl, ethyl, n- or isopropyl,
R3 represents iodine, methyl, difluoromethyl or trifluoromethyl,
R4 represents hydrogen, fluorine, chlorine or methyl,
R5 represents chlorine, bromine, iodine, methyl, difluoromethyl or trifluoromethyl,
R6 represents hydrogen, chlorine, methyl, amino or dimethylamino,
R7 represents methyl, difluoromethyl or trifluoromethyl,
R8 represents bromine or methyl,
R9 represents methyl or trifluoromethyl.

3. Active compound combinations according to Claim 1 comprising the carboxamide (1-8) 5-fluoro-1,3-dimethyl-*N*-[2-(1,3,3-trimethylbutyl)phenyl]-1*H*-pyrazole-4-carboxamide (group 1) and at least one active compound selected from the following groups (2) and (3) according to Claim 1.

4. Active compound combinations according to Claim 1 comprising the carboxamide (1-2) *N*-[2-(1,3-dimethylbutyl)phenyl]-5-fluoro-1,3-dimethyl-1*H*-pyrazole-4-carboxamide (group 1) and at least one active compound selected from the following groups (2) and (3) according to Claim 1.

5. Active compound combinations according to Claim 1 comprising the carboxamide (1-15) *N*-[2-(1,3-dimethylbutyl)phenyl]-2-(trifluoromethyl)benzamide (group 1) and at least one active compound selected from the following groups (2) and (3) according to Claim 1.

6. Active compound combinations according to Claim 1 comprising the carboxamide (1-13) *N*-[2-(1,3-dimethylbutyl)phenyl]-2-iodobenzamide (group 1) and at least one active compound selected from the following groups (2) and (3) according to Claim 1.

7. Use of active compound combinations according to Claim 1 for controlling unwanted phytopathogenic fungi.

8. Use of active compound combinations according to Claim 1 for treating seed.

9. Use of active compound combinations according to Claim 1 for treating transgenic plants.

10. Use of active compound combinations according to Claim 1 for treating seed of transgenic plants.

**11.** Seed treated with an active compound combination according to Claim 1.

**12.** Method for controlling unwanted phytopathogenic fungi, **characterized in that** active compound combinations according to Claim 1 are applied to the unwanted phytopathogenic fungi and/or their habitat and/or seed.

**13.** Process for preparing fungicidal compositions, **characterized in that** active compound combinations according to Claim 1 are mixed with extenders and/or surfactants.

## Revendications

**1.** Combinaisons synergiques de substances actives fongicides contenant un carboxamide de formule générale (I) (groupe 1)

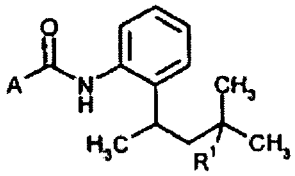

(I)

dans laquelle

$R^1$ représente l'hydrogène, un halogène, un reste alkyle en $C_1$ à $C_3$ ou halogénalkyle en $C_1$ à $C_3$ ayant 1 à 7 atomes de fluor, de chlore et/ou de brome,
A représente l'un des restes A1 à A8 suivants :

A1

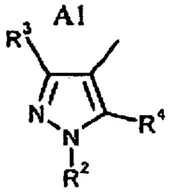

A2

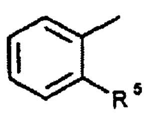

A3

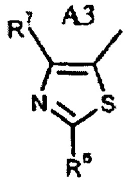

A4

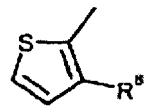

A5

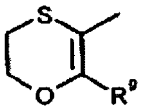

A6

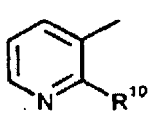

A7

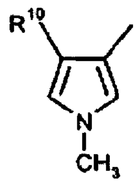

A8

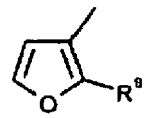

$R^2$ représente un reste alkyle en $C_1$ à $C_3$,
$R^3$ représente l'hydrogène, un halogène, un reste alkyle en $C_1$ à $C_3$ ou un reste halogénalkyle en $C_1$ à $C_3$ ayant 1 à 7 atomes de fluor, de chlore et/ou de brome,
$R^4$ représente l'hydrogène, un halogène ou un reste alkyle en $C_1$ à $C_3$,
$R^5$ représente un halogène, un reste alkyle en $C_1$ à $C_3$ ou un reste halogénalkyle en $C_1$ à $C_3$ ayant 1 à 7 atomes de fluor, de chlore et/ou de brome,
$R^6$ représente l'hydrogène, un halogène, un reste alkyle en $C_1$ à $C_3$, amino, mono- ou di(alkyle en $C_1$ à $C_3$)amino,
$R^7$ représente l'hydrogène, un halogène, un reste alkyle en $C_1$ à $C_3$ ou un reste halogénalkyle en $C_1$ à $C_3$ ayant 1 à 7 atomes de fluor, de chlore et/ou de brome,
$R^8$ représente un halogène, un reste alkyle en $C_1$ à $C_3$ ou un reste halogénalkyle en $C_1$ à $C_3$ ayant 1 à 7 atomes de fluor, de chlore et/ou de brome,
$R^9$ représente un halogène, un reste alkyle en $C_1$ à $C_3$ ou un reste halogénalkyle en $C_1$ à $C_3$ ayant 1 à 7 atomes

de fluor, de chlore et/ou de brome,

$R^{10}$ représente l'hydrogène, un halogène, un reste alkyle en $C_1$ à $C_3$ ou halogénalkyle en $C_1$ à $C_3$ ayant 1 à 7 atomes de fluor, de chlore et/ou de brome,

et

(2) le tolclofos-méthyle de formule

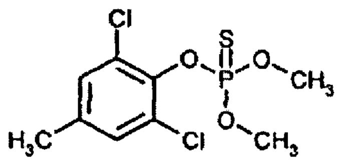

et/ou

(3) le flutonalil de formule

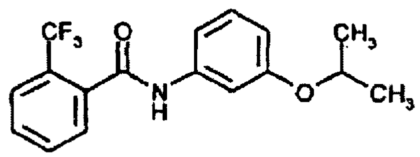

2. Combinaisons de substances actives suivant la revendication 1, contenant un carboxamide de formule générale (I) suivant la revendication 1 (groupe 1), dans laquelle

$R^1$ représente l'hydrogène, le fluor, le chlore, un reste méthyle, éthyle, n-propyle, isopropyle, monofluorométhyle, difluorométhyle, trifluorométhyle, monochlorométhyle, dichlorométhyle ou trichlorométhyle,

A représente l'un des restes A1 à A5 suivants :

A1 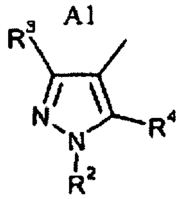 A2 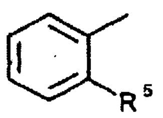 A3 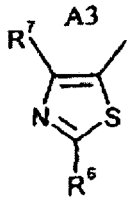 A4 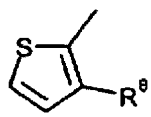 A5 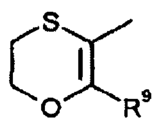

$R^2$ représente un reste méthyle, éthyle, n-propyle ou isopropyle,

$R^3$ représente l'iode, un reste méthyle, difluorométhyle ou trifluorométhyle,

$R^4$ représente l'hydrogène, le fluor, le chlore ou un reste méthyle,

$R^5$ représente le chlore, le brome, l'iode, un reste méthyle, difluorométhyle ou trifluorométhyle,

$R^6$ représente l'hydrogène, le chlore, un reste méthyle, amino ou diméthylamino,

$R^7$ représente un reste méthyle, difluorométhyle ou trifluorométhyle,

$R^8$ représente le brome ou un reste méthyle,

$R^9$ représente un reste méthyle ou trifluorométhyle.

3. Combinaisons de substances actives suivant la revendication 1, contenant le carboxamide (1-8) 5-fluoro-1,3-diméthyl-*N*-[2(1,3,3-triméthylbutyl)phényl]-1*H*-pyrazole-4-carboxamide (groupe 1) et au moins une substance active qui est choisie dans les groupes (2) et (3) suivants selon la revendication 1.

4. Combinaisons de substances actives suivant la revendication 1, contenant le carboxamide (1-2) *N*-[2-(1,3-diméthylbutyl)phényl]-5-fluoro-1,3-diméthyl-1*H*-pyrazole-4-carboxamide (groupe 1) et au moins une substance active qui est choisie dans les groupes (2) et (3) suivants selon la revendication 1.

5. Combinaisons de substances actives suivant la revendication 1, contenant le carboxamide (1-15) *N*-[2-(1,3-diméthylbutyl)phényl]-2-(trifluorométhyl)benzamide (groupe 1) et au moins une substance active qui est choisie dans les groupes (2) et (3) suivants selon la revendication 1.

**6.** Combinaisons de substances actives suivant la revendication 1, contenant le carboxamide (1-13) *N*-[2-(1,3-diméthylbutyl)phényl]2-iodobenzamide (groupe 1) et au moins une substance active qui est choisie dans les groupes (2) et (3) suivants selon la revendication 1.

**7.** Utilisation de combinaisons de substances actives suivant la revendication 1 pour la lutte contre des champignons phytopathogènes indésirables.

**8.** Utilisation de combinaisons de substances actives suivant la revendication 1 pour le traitement de semences.

**9.** Utilisation de combinaisons de substances actives suivant la revendication 1 pour le traitement de plantes transgéniques.

**10.** Utilisation de combinaisons de substances actives suivant la revendication 1 pour le traitement de semences de plantes transgéniques.

**11.** Semences qui ont été traitées avec une combinaison de substances actives suivant la revendication 1.

**12.** Procédé pour combattre des champignons phytopathogènes indésirables, **caractérisé en ce qu'**on épand des combinaisons de substances actives suivant la revendication 1 sur les champignons phytopathogènes indésirables et/ou sur leur milieu.

**13.** Procédé de préparation de compositions fongicides, **caractérisé en ce qu'**on mélange des combinaisons de substances actives suivant la revendication 1 avec des diluants et/ou des substances tensio-actives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03010149 A
- DE 10303589 A
- EP 0040345 A
- DE 2201063 A
- DE 2324010 A
- EP 0382375 A
- EP 0515901 A
- WO 9706171 A
- DE 19646407 A1
- EP 712396 B
- DE 2501040 A
- DE 2731522 A
- JP 10251240 A
- DE 10229595 A
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- Pesticide Manual. 1991, 249, 827
- **S.R COLBY.** Calculating Synergistic and Antagonistic Responses of Herbicide Combinations. *Weeds,* 1967, vol. 15, 20-22